(19) Europäisches Patentamt
European Patent Office
Office européen des brevets

(11) **EP 4 567 168 A1**

(12) **EUROPEAN PATENT APPLICATION**

(43) Date of publication:
**11.06.2025 Bulletin 2025/24**

(21) Application number: **23215314.8**

(22) Date of filing: **08.12.2023**

(51) International Patent Classification (IPC):
*D01F 6/92* (2006.01)       *D01D 5/08* (2006.01)
*C08L 67/04* (2006.01)       *D04H 1/435* (2012.01)

(52) Cooperative Patent Classification (CPC):
**D01F 6/92; C08G 63/91; D01D 5/08; D04H 1/435;
D04H 1/56; D04H 3/011**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Biofibre GmbH
84032 Altdorf (DE)**

(72) Inventors:
- **Dörrstein, Jörg
  84032 Altdorf (DE)**
- **Dendl, Simone
  84032 Altdorf (DE)**
- **Baumgartner, Matthias
  84032 Altdorf (DE)**

(74) Representative: **Maiwald GmbH
Elisenhof
Elisenstraße 3
80335 München (DE)**

(54) **BIODEGRADABLE FABRIC**

(57) The present disclosure relates to a biodegradable fabric, a method of manufacturing said biodegradable fabric, a biodegradable fabric prepared by a method according to the present disclosure, and a product comprising the biodegradable fabric of the present disclosure.

EP 4 567 168 A1

**Description**

**Field of the invention**

The present invention relates to a biodegradable fabric comprising a plurality of biodegradable fibers, as well as methods of manufacturing said biodegradable fabric, and products comprising said biodegradable fabric.

**Background**

Fabrics, in particular non-woven fabrics are used for many applications. However, such fabrics are usually made of persistent materials such as polypropylene. Therefore, the disposal of such fabrics is problematic and possibilities for recycling are limited.

The biological degradation of fabrics made from polypropylene is very slow. Furthermore, small particles of polypropylene are formed during said process. Said particles are also called "micro plastics" and are considered a major problem causing pollution, such as ocean pollution.

Therefore, biodegradable resins have been studied for their applicability. Today, biodegradable resins are widely used in various film materials, such as biodegradable bags, mulching films, plastic wraps, courier bags, etc. Such biodegradable resins include poly(terephthalate-co-sebacate) resins, i.e. a copolymer of butylene sebacate and butylene terephthalate. Poly(terephthalate-co-sebacate) resin contains flexible aliphatic chains and rigid aromatic chains, thus having high tenacity and high-temperature resistance. Due to the presence of ester bonds and the content of a terephthalic acid unit in a certain range, it is also promoted to have biodegradability at the same time.

However, there is limited knowledge on biodegradable polymers that can be manufactured into fibers and fabrics. When replacing the polymers of classical petrochemical fabrics, such as polypropylene fabrics, with biodegradable polymers, the fabrics this obtained do not meet the same mechanical properties as the classical fabrics. For example, for fibres and non-woven fabrics made from polylactide polymers, the strength at breaking is inferior to fibres and non-wovens made from polyolefins.

**Summary**

Therefore, there is still need for biodegradable fabrics comprising biodegradable fibers which have high mechanical strength and at the same time can be degraded biologically in a fast manner that could be furthermore tailored to the application.

The inventors of the present disclosure have now surprisingly found that the above demands and objectives can be obtained by using fibers comprising a polymer composition as defined herein. In other words, a fabric has been developed which comprises fibers having a high mechanical strength and which are readily biodegraded.

Hence, in a first aspect, the present disclosure relates to a biodegradable fabric comprising a plurality of biodegradable fibers, wherein the biodegradable fibers each comprise a biodegradable polymer obtainable by reacting a blend of a) a biodegradable polymeric material in an amount of 97 wt.-% or more based on the total weight of the blend, and b) an epoxide compound in an amount of from 0.05 wt.-% to 3 wt.-% based on the total weight of the blend, wherein the biodegradable fibers have a mean diameter of 25.0 $\mu$m or less.

In a second aspect, the present disclosure relates to a method of manufacturing a biodegradable fabric according to the first aspect of the present disclosure, the method comprising the steps of a) providing a biodegradable polymer obtainable by reacting a blend of a biodegradable polymeric material in an amount of 97 wt.-% or more based on the total weight of the blend, and an epoxide compound in an amount of from 0.05 wt.-% to 3 wt.-% based on the total weight of the blend; b) processing the polymer blend into a plurality of fibers; and c) bonding the plurality of fibers to provide a biodegradable fabric according to the first aspect of the present disclosure.

In a third aspect, the present disclosure relates to a biodegradable fabric which is prepared by a method of manufacturing according to the second aspect of the present disclosure.

In a fourth aspect, the present disclosure relates to a product comprising the biodegradable fabric according to the first aspect of the present disclosure or the biodegradable fabric according to the third aspect of the present disclosure.

**Detailed description**

The invention of the present disclosure is described in the following in more detail, exemplified by preferred embodiments and embodiment examples. However, it is understood that the scope of the present disclosure is not limited thereto, but only by the appendant claims.

The present disclosure, in very general terms, relates to four aspects, namely a first aspect being directed to a biodegradable fabric, a second aspect being directed to a method of manufacturing said biodegradable fabric, a third aspect being directed to a biodegradable fabric prepared by a method according to the second aspect of the present disclosure, and a fourth aspect being directed to a product comprising said biodegradable fabric according to the first aspect or the third aspect of the present disclosure.

In a further aspect, the preset disclosure relates to a biodegradable fiber. In a yet further aspect, the present disclosure relates to a biodegradable polymer, in particular a biodegradable polymer that is suitable for melt-blowing processes, spun-bond processes and/or wet-laid processes to yield biodegradable fibers as disclosed herein.

The biodegradable fabric

In a first aspect, the present disclosure relates to a biodegradable fabric comprising a plurality of biodegradable fibers, wherein the biodegradable fibers each comprise a biodegradable polymer obtainable by reacting a blend of a) a biodegradable polymeric material in an amount of 97 wt.-% or more based on the total weight of the blend, and b) an epoxide compound in an amount of from 0.05 wt.-% to 3 wt.-% based on the total weight of the blend, wherein the biodegradable fibers have a mean diameter of 25.0 $\mu$m or less.

In another aspect, the present disclosure relates to a biodegradable fabric comprising a plurality of biodegradable fibers, wherein the biodegradable fibers consist of a biodegradable polymer of a) a biodegradable polymeric material in an amount of 97 wt.-% or more based on the total weight of the biodegradable polymer, and b) an epoxide compound in an amount of from 0.05 wt.-% to 3 wt.-% based on the total weight of the biodegradable polymer, wherein the biodegradable fibers have a mean diameter of 25.0 $\mu$m or less.

In a preferred embodiment of the present disclosure, the biodegradable polymer comprises a biodegradable polymeric material in an amount of 97 wt.-% to 99.95 wt.-% based on the total weight of the biodegradable polymer, and an epoxide compound in an amount of from 0.05 wt.-% to 3 wt.-% based on the total weight of the biodegradable polymer. Thereby, it is further preferable that the amount of biodegradable polymeric material and the amount of the epoxide compound are chosen in that said amounts add up to the total weight of the biodegradable polymer of 100 wt.-%. In other words, the biodegradable polymer preferably consists of the biodegradable polymeric material and the epoxide compound, wherein the amount of biodegradable polymeric material and the amount of the epoxide compound add up to 100 wt.-%.

According to another preferred embodiment the biodegradable polymer consists of the biodegradable polymeric material as disclosed herein. In other words, it is conceivable that the epoxide compound is optional.

The inventors of the present disclosure have surprisingly found that a mechanically strong and durable biodegradable fabric can be successfully prepared from a plurality of biodegradable fibers comprising a high amount of a biodegradable polymer. This comes at surprise because biodegradable polymers are considered to not exhibit the same level of durability and strength as traditional synthetic fibers like polyesters or polypropylene. Therefore, biodegradable fabrics often have a limited applicability, especially in applications in which high mechanical stress is expected and/or high-performance characteristics are required. Generally, the presence of a high amount of biodegradable polymers can lead to decreased wear resistance and a shorter lifespan for the fabric. Therefore, traditional synthetic fibers may be preferred in the field.

According to a preferred embodiment of the present disclosure, the biodegradable fabric is a woven fabric or non-woven fabric. According to another preferred embodiment of the present disclosure, the biodegradable fabric is a non-woven fabric. According to another preferred embodiment of the present disclosure, the biodegradable fabric is a spun-bond fabric. According to another preferred embodiment of the present disclosure, the biodegradable fabric is a wet-laid fabric. According to a further preferred embodiment of the present disclosure, the biodegradable fabric is a melt blown fabric.

According to a preferred embodiment of the present disclosure, the biodegradable fabric has a pore size in the range of from 0.2 $\mu$m to 8.0 $\mu$m. Such pore size makes the biodegradable fabric according to the present disclosure particularly useful for industrial filtration processes without causing problems of disposal after usage.

According to another preferred embodiment of the present disclosure, the biodegradable fabric has a pore size of less than 0.2 $\mu$m. Such pore size makes the biodegradable fabric according to the present disclosure particularly useful for medical fabrics, such as surgical face masks, without causing problems of disposal after usage.

According to a preferred embodiment of the present disclosure, the biodegradable fabric has a specific weight of 38 g/m$^2$ to 68 g/m$^2$.

It is understood that the biodegradable fabric according to the present invention comprises a plurality of biodegradable fibers. Therefore, in a further aspect, the present disclosure relates to a biodegradable fiber as disclosed herein.

The biodegradable polymer

It is understood that the biodegradable polymer used for forming the biodegradable fibers is a key aspect of the present disclosure.

According to one aspect of the present disclosure, the biodegradable polymer is obtainable by reacting a blend of a biodegradable polymeric material with an epoxide compound.

According to one aspect of the present disclosure, the biodegradable polymer is a polylactic acid homopolymer as disclosed herein.

According to one aspect of the present disclosure, the biodegradable polymer comprises or consists of a biodegradable polymeric material as disclosed herein, preferably a polylactic acid homopolymer s disclosed herein.

According to one aspect of the present disclosure, the biodegradable polymer comprises a biodegradable polymeric material as disclosed herein, preferably a polylactic acid homopolymer s disclosed herein, and one or more epoxide compounds as disclosed herein.

According to a preferred embodiment of the present disclosure, it is understood that the biodegradable polymer is a block copolymer comprising 97 wt.-% of a biodegradable polymeric material based on the total weight of the biodegradable polymer and 3 wt.-% or less of an epoxide compound based on the total weight of the biodegradable polymer. In other words, it is understood that the biodegradable polymer as disclosed herein may comprise or consist of a polymeric material as disclosed herein that is crosslinked by an epoxide compound as disclosed herein.

According to a preferred embodiment of the present disclosure, the biodegradable polymer has a $M_w$ in the range of from 20 kg/mol to 190 kg/mol. According to another preferred embodiment of the present disclosure, the biodegradable polymer has a $M_w$ in the range of from 20 kg/mol to 120 kg/mol. According to another preferred embodiment of the present disclosure, the biodegradable polymer has a $M_w$ in the range of from 20 kg/mol to 95 kg/mol. According to another preferred embodiment of the present disclosure, the biodegradable polymer has a $M_w$ in the range of from 20 kg/mol to 60 kg/mol. According to a further preferred embodiment of the present disclosure, the biodegradable polymer has a $M_w$ in the range of from 25 kg/mol to 40 kg/mol. According to a yet further preferred embodiment of the present disclosure, the biodegradable polymer has a $M_w$ in the range most preferably of from 28 kg/mol to 35 kg/mol.

According to another preferred embodiment of the present disclosure, the biodegradable polymer has a $M_n$ in the range of from 10 kg/mol to 110 kg/mol. According to another preferred embodiment of the present disclosure, the biodegradable polymer has a $M_n$ in the range of from 10 kg/mol to 60 kg/mol. According to a further preferred embodiment of the present disclosure, the biodegradable polymer has a $M_n$ in the range of 10 kg/mol to 30 kg/mol. According to a yet further preferred embodiment of the present disclosure, the biodegradable polymer has a $M_n$ in the range of from most 15 kg/mol to 25 kg/mol.

According to another preferred embodiment of the present disclosure, the biodegradable polymer has a $M_w/M_n$-ratio in the range of from 1.2 to 2.5. According to another preferred embodiment of the present disclosure, the biodegradable polymer a $M_w/M_n$-ratio in the range of from 1.6 to 2.3. According to another preferred embodiment of the present disclosure, the biodegradable polymer has a $M_w/M_n$-ratio in the range of from 1.6 to 1.8. According to a further preferred embodiment of the present disclosure, the biodegradable polymer has a $M_w/M_n$-ratio in the range of from 1.80 to 2.20. According to a further preferred embodiment of the present disclosure, the biodegradable polymer has a $M_w/M_n$-ratio in the range of from 2.00 to 2.10.

According to a preferred embodiment of the present disclosure, the biodegradable polymer is obtainable by heating and/or shearing the blend of the biodegradable polymeric material and the epoxide compound.

According to a further preferred embodiment of the present disclosure, the biodegradable polymer is obtainable by heating and/or shearing the blend of the biodegradable polymeric material and the epoxide compound in an extruder. According to a further preferred embodiment of the present disclosure, the blend of the biodegradable polymeric material and the epoxide compound is heated to a temperature in the range of from 180 °C to 220 °C. According to a further preferred embodiment of the present disclosure, the blend of the biodegradable polymeric material and the epoxide compound is heated to a temperature in the range of from 185 °C to 205 °C. According to a further preferred embodiment of the present disclosure, the blend of the biodegradable polymeric material and the epoxide compound is extruded at a velocity of the screws is in the range of from 100 rpm to 150 rpm.

*The biodegradable polymeric material*

According to a preferred embodiment of first aspect of the present disclosure, the biodegradable polymeric material is at least one biodegradable polyester. According to another preferred embodiment of the first aspect of the present disclosure, the biodegradable polyester is selected from the group consisting of polylactic acid homopolymer, polyhydroxyalkanoate, polycaprolactone, polybutylene adipate terephthalate, polybutylene succinate, polybutylene succinate adipate, and mixtures thereof.

According to another preferred embodiment of first aspect, the biodegradable polymeric material is a polyhydroxyalkanoate (PHA). According to another preferred embodiment of first aspect, the biodegradable polymeric material is a polycaprolactone (PCL). According to another preferred embodiment of first aspect, the biodegradable polymeric material is a polybutylene adipate terephthalate (PBAT). According to another preferred embodiment of first aspect, the biodegradable polymeric material is a polybutylene succinate (PBS). According to another preferred embodiment of first aspect, the biodegradable polymeric material is a polybutylene succinate adipate (PBSA). According to another preferred embodiment of first aspect, the biodegradable polymeric material is a mixture of a polylactic acid homopolymer (PLA) and a polybutylene succinate adipate (PBSA).

According to a further preferred embodiment of first aspect, the biodegradable polymeric material is a polylactic acid homopolymer (PLA). In other words, it is most preferable that the biodegradable polymeric material is a polylactic acid homopolymer (PLA), in particular a polylactic acid homopolymer as further disclosed herein.

As used herein, a "polylactic acid homopolymer" consists of lactic acid monomers that are connected via an ester bond.

The inventors of the present disclosure have surprisingly found that biodegradable fabrics comprising a plurality of biodegradable fibers has excellent mechanical properties: This is because the biodegradable fibers as disclosed herein exhibit both high breaking strength and high elongation at break.

According to another preferred embodiment of the first aspect, the biodegradable polymeric material is a mixture of a polylactic acid homopolymer (PLA) and a polybutylene succinate adipate (PBSA). In this case, it is preferable that the polymeric biodegradable polymeric material comprises at least 80 wt.-% of the polylactic acid homopolymer and 20 wt.-% or less of the polybutylene succinate adipate based on the total weight of the biodegradable polymeric material. According to another preferred embodiment of the first aspect, the polymeric biodegradable polymeric material comprises at least 85 wt.-% of the polylactic acid homopolymer and 15 wt.-% or less of the polybutylene succinate adipate based on the total weight of the biodegradable polymeric material. According to another preferred embodiment of the first aspect, the polymeric biodegradable polymeric material comprises at least 90 wt.-% of the polylactic acid homopolymer and 10 wt.-% or less of the polybutylene succinate adipate based on the total weight of the biodegradable polymeric material. According to a further preferred embodiment of the first aspect, the polymeric biodegradable polymeric material comprises at least 95 wt.-% of the polylactic acid homopolymer and 5 wt.-% or less of the polybutylene succinate adipate based on the total weight of the biodegradable polymeric material. According to yet further a preferred embodiment of the first aspect, the polymeric biodegradable polymeric material comprises at least 98 wt.-% of the polylactic acid homopolymer and 2 wt.-% or less of the polybutylene succinate adipate based on the total weight of the biodegradable polymeric material.

The inventors of the present disclosure have surprisingly found that the mechanical properties of a biodegradable fabric or a biodegradable fiber can be even further improved when the amount of polylactic acid homopolymer as disclosed herein in the biodegradable polymeric material is high. These excellent mechanical properties are maintained even for fabrics comprising fibers having a low diameter.

According to another preferred embodiment of the first aspect, the biodegradable polymeric material is a biodegradable polymeric material according to DIN EN ISO 13432. According to a further preferred embodiment of the first aspect, the biodegradable polymeric material is a biodegradable polymeric material according to DIN EN ISO 13432:2000-12.

According to a preferred embodiment of the first aspect, the blend comprises the biodegradable polymeric material in an amount of 97.0 wt.-% or more based on the total weight of the blend, preferably in an amount of 98.0 wt.-% or more based on the total weight of the blend, more preferably in an amount of 99.0 wt.-% or more based on the total weight of the blend, most preferably in an amount of 99.5 wt.-% or more based on the total weight of the blend.

In addition to that, the inventors of the present disclosure have surprisingly found that the amount of water contained in the biodegradable polymeric material, such as PLA, may be important to obtain fibers with excellent mechanical strength. During synthesis of biodegradable polyesters, water is generated as a by-product. However, the removal of water from said biodegradable polyesters is required to limit the degradation/hydrolysis of polyesters by moisture upon heating, e.g. during melt blowing. This is particularly demanding since the diffusion of moisture in a viscous polymeric matrix is slow, even when applying high temperature and vacuum. The residual water in the biodegradable polymeric material can hence limit the molecular weight of the biodegradable polymeric material that can be achieved and thus imparts its characteristics.

According to a preferred embodiment of the present disclosure, the biodegradable polymeric material has a water content of 1 wt.-% or less based on the total weight of the biodegradable polymeric material. According to another preferred embodiment of the present disclosure, the biodegradable polymeric material has a water content of 0.1 wt.-% or less based on the total weight of the biodegradable polymeric material. According to a further preferred embodiment of the present disclosure, the biodegradable polymeric material has a water content of 300 ppm or less based on the total weight of the biodegradable polymeric material. According to a yet further preferred embodiment of the present disclosure, the biodegradable polymeric material has a water content of 150 ppm based on the total weight of the biodegradable polymeric material.

According to a preferred embodiment of the present disclosure, the biodegradable polymeric material in the biodegradable polymeric material consists of at least 20 wt.-% of bio-based material based on the total weight of the biodegradable polymeric material. According to another preferred embodiment of the present disclosure, the biodegradable polymeric material in the biodegradable polymeric material consists of at least 50 wt.-% of bio-based material based on the total weight of the biodegradable polymeric material. According to another preferred embodiment of the present disclosure, the biodegradable polymeric material in the biodegradable polymeric material consists of at least 85 wt.-% of bio-based material based on the total weight of the biodegradable polymeric material. According to another preferred embodiment of the present disclosure, the biodegradable polymeric material in the biodegradable polymeric material consists of at least 95 wt.-%of bio-based material based on the total weight of the biodegradable polymeric material.

*Polylactic acid as polymeric material or biodegradable polymer*

The inventors of the present disclosure have found that a lactic acid homopolymer (PLA) can be preferably used as the biodegradable polymeric material. In another embodiment of the present disclosure, a biodegradable fiber consists of a lactic acid homopolymer (PLA) as disclosed herein.

In that, it is particularly preferred to use a specific PLA as defined in the following as biodegradable polymeric material:
PLA has the advantage that it can be readily obtained from renewable resources such as sugar beet, maize, corn, and cassava. It is a biodegradable material itself and its life cycle potentially reduces the earth's carbon dioxide level thus contributing to the fight against climate warming. PLA is nowadays mostly obtained from a semi-synthetic scheme.

PLA is a thermoplastic polyester formally obtained by condensation of lactic acid under loss of water, i.e. PLA can be synthesized in a polycondensation reaction. It can also be prepared by ring-opening polymerization of lactide, the cyclic dimer of the basic repeating unit.

Lactic acid has a stereocenter. Therefore, it is understood that PLA may contain both enantiomers of lactic acid.

The inventors of the present disclosure have surprisingly found that the ratio between the enantiomers in the PLA is a crucial factor to provide fibers comprising a biodegradable polymer comprising PLA as the biodegradable polymeric material with excellent mechanical properties:
According to a preferred embodiment of the present disclosure, the PLA consists of from 2 wt.-% to 12 wt.-% of (*R*)-lactic acid monomer units based on the total weight of the PLA. Accordingly, it is understood that the PLA consists of from 2 wt.-% to 12 wt.-% of (R)-lactic acid monomer units and 88 wt.-% to 98 wt.-% of (*S*)-lactic acid monomer units based on the total weight of the PLA. According to another preferred embodiment of the present disclosure, the PLA consists of from 2 wt.-% to 8 wt.-% of (*R*)-lactic acid monomer units based on the total weight of the PLA. Accordingly, it is understood that the PLA consists of from 2 wt.-% to 8 wt.-% of (*R*)-lactic acid monomer units and 92 wt.-% to 98 wt.-% of (*S*)-lactic acid monomer units based on the total weight of the PLA. According to another preferred embodiment of the present disclosure, the PLA consists of from 2 wt.-% to 6 wt.-% of (*R*)-lactic acid monomer units based on the total weight of the PLA. Accordingly, it is understood that the PLA consists of from 2 wt.-% to 6 wt.-% of (*R*)-lactic acid monomer units and 94 wt.-% to 98 wt.-% of (*S*)-lactic acid monomer units based on the total weight of the PLA. According to another preferred embodiment of the present disclosure, the PLA consists of from 3 wt.-% to 5 wt.-% of (*R*)-lactic acid monomer units based on the total weight of the PLA. Accordingly, it is understood that the PLA consists of from 3 wt.-% to 5 wt.-% of (*R*)-lactic acid monomer units and 95 wt.-% to 97 wt.-% of (*S*)-lactic acid monomer units based on the total weight of the PLA. According to another preferred embodiment of the present disclosure, the PLA consists of about 4 wt.-% of (*R*)-lactic acid monomer units based on the total weight of the PLA. Accordingly, it is understood that the PLA consists of about 4 wt.-% of (*R*)-lactic acid monomer units and about 96 wt.-% of (*S*)-lactic acid monomer units based on the total weight of the PLA.

The inventors of the present disclosure have surprisingly found that the enantiomeric ratio between (*R*)-lactic acid and (*L*)-lactic acid may be important for the mechanical properties of a fiber comprising PLA and the processability of PLA: By adjusting the amount of (*R*)-lactic acid in PLA, the melting temperature of PLA can be adjusted, i.e. higher amount of (*R*)-isomer gives a greater entropy which decreases melting temperature. At the same time, the presence of amorphous regions in the PLA is increased and crystalline regions in the polymer are decreased. On the other hand, shear viscosity, glass transition temperature and crystallinity are increased with increasing (*S*)-lactic acid content.

Therefore, the inventors of the present disclosure have studied the influence of the enantiomeric ratio between (*R*)- and (*S*)-lactic acid to ascertain their influence on the performance and properties of fibers comprising PLA. Comparison of fabrics comprising fibers of PLA with varying amounts of (*R*)-enantiomer not only revealed differences in melting temperature which provides for energy and cost savings in the manufacture of fabrics, but fibers with the above disclosed amounts of (*R*)-lactic acid were also found to show improved mechanical properties, such as increased breaking strength and elongation at break.

Furthermore, PLA containing high amounts of L-lactic acid exceeding the above-disclosed amounts exhibit lower degradation than ones containing the above disclosed amounts mainly due to the highly ordered structure leading to a higher degree of crystallinity.

According to another preferred embodiment of the present disclosure, the biodegradable polymeric material is a polylactic acid homopolymer, wherein the PLA has a $M_w$ in the range of from 15 kg/mol to 120 kg/mol. According to another preferred embodiment of the present disclosure, the PLA has a $M_w$ in the range of from 20 kg/mol to 105 kg/mol. According to another preferred embodiment of the present disclosure, the PLA has a $M_w$ in the range of from 20 kg/mol to 80 kg/mol.

According to another preferred embodiment of the present disclosure, the PLA has a $M_w$ in the range of from 20 kg/mol to 55 kg/mol. According to a further preferred embodiment of the present disclosure, the PLA has a $M_w$ in the range of from 23 kg/mol to 40 kg/mol. According to a yet further preferred embodiment of the present disclosure, the PLA has a $M_w$ in the range of from 25 kg/mol to 30 kg/mol.

The inventors of the present disclosure have surprisingly found that fibers with high elongation at break and high breaking strength can be prepared from a biodegradable polymeric material that is a polylactic acid homopolymer with a low molecular mass $M_w$ as disclosed above.

According to another preferred embodiment of the present disclosure, the biodegradable polymeric material is a polylactic acid homopolymer, wherein the PLA has a $M_n$ in the range of from 10 kg/mol to 70 kg/mol. According to another preferred embodiment of the present disclosure, the biodegradable polymeric material is a polylactic acid homopolymer, wherein the PLA has a $M_n$ in the range of from 10 kg/mol to 50 kg/mol. According to another preferred embodiment of the present disclosure, the biodegradable polymeric material is a polylactic acid homopolymer, wherein the PLA has a $M_n$ in the range of from 10 kg/mol to 35 kg/mol. According to a further preferred embodiment of the present disclosure, the PLA has a $M_n$ in the range of from 12 kg/mol to 20 kg/mol.

According to another preferred embodiment of the present disclosure, the biodegradable polymeric material is a polylactic acid homopolymer, wherein the PLA has a $M_w/M_n$-ratio in the range of from 1.2 to 2.5. According to another preferred embodiment of the present disclosure, the PLA has a $M_w/M_n$-ratio in the range of from 1.4 to 2.2. According to another preferred embodiment of the present disclosure, the PLA has a $M_w/M_n$-ratio in the range of from 1.6 to 2.0. According to a further preferred embodiment of the present disclosure, the PLA has a $M_w/M_n$-ratio in the range of from 1.65 to 1.80. According to a further preferred embodiment of the present disclosure, the PLA has a $M_w/M_n$-ratio in the range of from 1.70 to 1.75.

Generally, it is understood that PLA with the above disclosed $M_w$ and/or $M_n$ can either be prepared by polycondensation of lactic acid or by degradation of commercially available PLA having a higher $M_w$ and $M_n$ as disclosed above. Such methods are known to the skilled person and further described in Example 1.

Furthermore, it is understood that PLA having the molecular weight as disclosed hereinabove can be degraded biologically in a fast manner.

In contrast to conventional plastics such as PE, PP and the like, PLA that is exposed to natural environments is degraded by microorganisms, and mechanisms of bulk erosion instead of surface erosion. Therefore, it has been frequently discussed that materials from the PLA-family and natural-fibre filled PLA materials can be considered as not forming permanent microplastic. The resulting monomeric units of PLA (lactic acid) after complete primary degradation are completely natural and found in various natural products such as milk products. Yet, it may take considerable time for a product to completely decompose depending particularly on the molecular weight of PLA. The shorter the polymer chains, the higher the proportion of carboxylic acid groups (-COOH), which increases the polarity. This causes an increased absorption (hygroscopicity), which accelerates degradation.

Even more strikingly, only a few PLA-degrading microorganisms have been isolated, which have the capability to metabolize high molecular weight PLA. Therefore, PLA exceeding the above-disclosed molecular weight is only slowly degraded biologically.

*Epoxide compound*

The second component of the blend which is reacted to obtain the biodegradable polymer is an epoxide compound. According to a first aspect of the present disclosure, the epoxide compound is present in an amount of from 0.05 wt.-% to 3 wt.-% based on the total weight of the blend.

The inventors of the present disclosure have surprisingly found that the presence of an epoxide compound in the blend from which the biodegradable polymer is obtained, increases not only the processability of the biodegradable polymer, but also improves both the mechanical properties of the biodegradable fabric and its biological and physical degradation.

According to a preferred embodiment of the present disclosure, the epoxide compound comprises two or more epoxide groups. According to another preferred embodiment of the preset disclosure, the epoxide compound comprises two or three epoxide groups. According to a further preferred embodiment of the present disclosure, the epoxide compound comprises two epoxide groups.

The epoxide compound may, besides the two or more epoxide groups, further comprise a linker. It is understood that the two or more epoxide groups of the epoxide compound are bound to the linker.

According to a preferred embodiment of the present disclosure, the epoxide compound comprises two or more epoxide groups, preferably two epoxide groups, and a linker. According to another preferred embodiment of the present disclosure, the linker is a linear $C_2$-$C_{50}$ alkyl, or a linear $C_3$-$C_{50}$ alkenyl, or a linear $C_3$-$C_{50}$ alkinyl, or a polymer. According to another preferred embodiment of the present disclosure, the epoxide compound comprises two or more epoxide groups, preferably two epoxide groups, and a linker, wherein the linker is a biodegradable polymer. According to another preferred embodiment of the present disclosure, the epoxide compound is an acrylic copolymer having a $M_w$ in the range of from 1.500 g/mol to 10,000 g/mol, preferably 3,000 to 8,000 g/mol, more preferably 5,000 to 7,500 g/mol, most preferably 6,000 to 7,200 g/mol.

According to a further preferred embodiment of the present disclosure, the epoxide compound is JONCRYL ADR-4368 (obtained from BASF), or JONCRYL ADR-4400 (obtained from BASF), or Cesa-extend BLA0025041-ZN (obtained from Clariant).

It is understood that the biodegradable polymeric material and the epoxide compound undergo a reaction. For example, if the biodegradable polymeric material is a biodegradable polyester, the epoxide groups of the linker react with the free carboxylic acid groups of the biodegradable polyester thus forming an ester bond. Thus, the biodegradable polymer is obtained. Suitable reaction conditions are known to the skilled person.

This does not only improve the mechanical properties of the biodegradable fibers comprising the biodegradable polymer but also improves the speed of biodegradation. Without wishing to be bound by theory, it is assumed that the ester bonds formed from the carboxylic acid group of the biodegradable polyester and the epoxide compound is not only hydrolytically cleavable but also is not sterically demanding. Therefore, a microorganism can more easily adhere to and assimilate the biopolymer. Hence, the speed of biodegradation is increased.


The biodegradable fibers


It is understood that the biodegradable fabric according to the present invention comprises a plurality of biodegradable fibers. Therefore, in a further aspect, the present disclosure relates to a biodegradable fiber as disclosed herein.

It is understood that the biodegradable fiber as disclosed herein comprises, preferably consists of, a biodegradable polymer as disclosed herein.

According to the first aspect of the present disclosure, the biodegradable fabric comprises a plurality of biodegradable fibers. It is understood that each of said biodegradable fibers comprises the biodegradable polymer disclosed above. According to a preferred embodiment of the present disclosure, the biodegradable polymer is obtainable by reacting a blend of a biodegradable polymeric material in an amount of 97 wt.-% or more based on the total weight of the blend, and an epoxide compound in an amount of from 0.05 wt.-% to 3 wt.-% based on the total weight of the blend.

According to another preferred embodiment of the present disclosure, the biodegradable polymer comprises a biodegradable polymeric material in an amount of 97 wt.-% or more based on the total weight of the biodegradable polymer, and an epoxide compound in an amount of from 0.05 wt.-% to 3 wt.-% based on the total weight of the biodegradable polymer. According to another preferred embodiment of the present disclosure, the biodegradable polymer is a block copolymer comprising a biodegradable polymeric material in an amount of 97 wt.-% or more based on the total weight of the biodegradable polymer, and an epoxide compound in an amount of from 0.05 wt.-% to 3 wt.-% based on the total weight of the biodegradable polymer. According to another preferred embodiment of the present disclosure, the biodegradable polymer comprises or consists of a biodegradable polymeric material as disclosed herein.

According to the first aspect of the present disclosure, the biodegradable fibers have a mean diameter of 25.0 $\mu$m or less. According to a preferred embodiment of the present disclosure, the biodegradable fibers have a mean diameter in the range of from 1.0 $\mu$m to 25.0 $\mu$m. According to another preferred embodiment of the present disclosure, the biodegradable fibers have a mean diameter in the range of from 2.0 $\mu$m to 20.0 $\mu$m. According to another preferred embodiment of the present disclosure, the biodegradable fibers have a mean diameter in the range of from 2.0 $\mu$m to 15.0 $\mu$m. According to another preferred embodiment of the present disclosure, the biodegradable fibers have a mean diameter in the range of from 3.0 $\mu$m to 12.0 $\mu$m. According to a further preferred embodiment of the present disclosure, the biodegradable fibers have a mean diameter in the range of from 4.0 $\mu$m to 12.0 $\mu$m. According to a yet further preferred embodiment of the present disclosure, the biodegradable fibers have a mean diameter in the range of from 5.0 $\mu$m to 10.0 $\mu$m.

The inventors of the present disclosure have surprisingly found that fibers having a mean diameter in the range disclosed above can be reliably prepared when using the above disclosed biodegradable polymer.

Even more strikingly, the inventors have also found that the fibers have excellent mechanical properties, despite the small mean diameter:

According to a preferred embodiment of the present disclosure, the biodegradable fibers each have a breaking strength of at least 100 MPa. According to another preferred embodiment of the present disclosure, the biodegradable fibers each have a breaking strength of at least 200 MPa. According to another preferred embodiment of the present disclosure, the biodegradable fibers each have a breaking strength of at least 300 MPa. According to a further preferred embodiment of the present disclosure, the biodegradable fibers each have a breaking strength of at least 400 MPa.

According to another preferred embodiment of the present disclosure, the biodegradable fibers each have a breaking strength of 700 MPa or less. According to another preferred embodiment of the present disclosure, the biodegradable fibers each have a breaking strength of 600 MPa or less. According to a further preferred embodiment of the present disclosure, the biodegradable fibers each have a breaking strength of 500 MPa or less.

According to another preferred embodiment of the present disclosure, the biodegradable fibers each have an elongation at break of at least 80 %. According to another preferred embodiment of the present disclosure, the biodegradable fibers each have an elongation at break of at least 100 %. According to another preferred embodiment of the present disclosure, the biodegradable fibers each have an elongation at break of at least 150 %.

According to another preferred embodiment of the present disclosure, the biodegradable fibers each have an elongation at break of at 250 % or less. According to another preferred embodiment of the present disclosure, the biodegradable fibers each have an elongation at break of 200 % or less.

Therefore, the biodegradable fibers of the first aspect of the present disclosure have improved mechanical properties, even when compared to non-biodegradable fibers, such as fibers of polypropylene (PP).

## Method of manufacturing

In a second aspect, the present disclosure relates to a method of manufacturing a biodegradable fabric according to the first aspect of the present disclosure, the method comprising the steps of a) providing a biodegradable polymer obtainable by reacting a blend of a biodegradable polymeric material in an amount of 97 wt.-% or more based on the total weight of the blend, and an epoxide compound in an amount of from 0 wt.-% to 3 wt.-% based on the total weight of the blend; b) processing the biodegradable polymer into a plurality of fibers; and c) bonding the plurality of fibers to provide a biodegradable fabric according to the first aspect of the present disclosure.

According to a preferred embodiment of the present disclosure, the steps of processing the polymer into a plurality of fibers, and bonding the plurality of fiber to provide a biodegradable fabric is a spun-bond process. According to another preferred embodiment of the present disclosure, the step of processing the polymer into a plurality of fibers, and bonding the plurality of fiber to provide a biodegradable fabric is a wet-laid process. According to a further preferred embodiment of the present disclosure, the step of processing the polymer into a plurality of fibers, and bonding the plurality of fiber to provide a biodegradable fabric is a melt blowing process.

### *Melt blowing process*

It is particularly preferable that the biodegradable fabric is prepared by a melt blowing process.

Melt blowing is a process for producing fibrous webs or articles directly from polymers or resins using high-velocity air or another appropriate force to attenuate the filaments.

It is a one-step process in which high-velocity air blows a molten thermoplastic resin from an extruder die tip onto a conveyor or take-up screen to form a fine fibrous and self-bonding web to provide a biodegradable fabric.

A typical melt blowing process consists of the following elements extruder, metering pumps, die assembly, web formation, and winding.

In a first step of melt blowing, the biodegradable polymer is fed into an extruder in which a screw rotates in a heated barrel. As the polymer moves along the barrel, it melts due to the heat and friction of viscous flow and the mechanical action between the screw and barrel.

According to a preferred embodiment of the present disclosure, the melt blowing process comprises heating the biodegradable polymer to a temperature in the range of from 155 °C to 240 °C °C to provide a molten polymer; and melt blowing the molten blend to provide the biodegradable fabric. According to another preferred embodiment of the present disclosure, the melt blowing process comprises heating the biodegradable polymer to a temperature in the range of from 180 °C to 230 °C to provide a molten polymer; and melt blowing the molten blend to provide the biodegradable fabric. According to another preferred embodiment of the present disclosure, the melt blowing process comprises heating the biodegradable polymer to a temperature in the range of from 200 °C to 220 °C to provide a molten polymer; and melt blowing the molten blend to provide the biodegradable fabric. According to a further preferred embodiment of the present disclosure, the melt blowing process comprises heating the biodegradable polymer to a of about 210 °C to provide a molten polymer; and melt blowing the molten blend to provide the biodegradable fabric.

Due to the specific composition of the biodegradable polymer described above, the temperature that is required for providing a molten polymer are particularly low. Therefore, the present disclosure offers high savings of energy and costs. At the same time, throughput is increased.

The molten polymer is then conveyed to a metering pump. The metering pump is a positive-displacement and constant-volume device for uniform melt delivery to the die assembly. The metering pump also provides polymer metering and the required process pressure.

The molten polymer from the metering pump goes to the feed distribution system to provide uniform flow to the die nosepiece in a die assembly. The die assembly consists of three distinct components: a polymer-feed distribution, a die nosepiece, and air manifolds. The feed distribution is designed in such a way that the polymer distribution is less dependent on the shear properties of the polymer. The feed distribution balances both the flow and the residence time across the width of the die. From the feed distribution channel the molten polymer is delivered to the die nosepiece. The die nosepiece is a wide, hollow, and tapered piece of metal having several hundred orifices or holes across the width. The polymer melt is extruded from these holes to form filament strands, which are subsequently attenuated by hot air to form fine fibers. The die nosepiece has approximately 0.4 $\mu$m diameter orifices spaced at 1 to 4 orifices per millimeter of the nosepiece. The air manifolds supply high velocity hot air (also called as primary air) through the slots on the top and bottom sides of the die nosepiece. The high velocity air is generated using an air compressor. The compressed air is passed through a heat exchange unit such as an electrical or gas heated furnace, to heat the air to desired processing temperatures. The exits from the top and bottom sides of the die through narrow air gaps.

According to a preferred embodiment of the present disclosure, the temperature of the primary air is in the range of from 230°C to 360 °C and the velocity of the primary air is in the range of from 0.5 to 0.8 the speed of sound in air.

As soon as the molten polymer is extruded from the die holes, high velocity hot air streams (exiting from the top and bottom sides of the die nosepiece) attenuate the polymer streams to form microfibers. As the hot air stream containing the microfibers progresses toward a collector screen, it draws in a large amount of surrounding air (also called secondary air) that cools and solidifies the fibers. The solidified fibers subsequently get laid randomly onto the collecting screen, forming a self-bonded nonwoven web. The fibers are generally laid randomly (and also highly entangled) because of the turbulence in the air stream.

According to another preferred embodiment of the present disclosure, the melt blowing comprises the step of collecting the fibers on a conveyor belt or on a rotating drum, preferably on a rotating drum.

The conveyor belt or rotating drum is also referred to as collector. The collector speed and the collector distance from the die nosepiece can be varied to produce a variety of melt-blown fabrics. A vacuum can be applied to the inside of the collector screen to withdraw the hot air and enhance the fiber laying process. The melt-blown fabric can be wound onto a cardboard core and processed further according to the end-use requirement. The combination of fiber entanglement and fiber-to-fiber bonding generally produce enough web cohesion so that the fabric can be readily used without further bonding. However, additional bonding and finishing processes may optionally further be applied to these melt-blown fabrics.

### Spun-bond process

It is preferable that the biodegradable fabric is prepared by a spun-bond process.

According to a preferred embodiment, the melt-spun process comprises the steps of providing a biodegradable polymer as disclosed herein, melt spinning a plurality of fibers from a spinneret to provide a plurality of filaments, cooling the filaments to provide cooled filaments; spinning the cooled filaments to provide fibers, and collecting the fibers on a collecting surface to form a nonwoven web, and bonding said web to provide a nonwoven biodegradable fabric.

A typical spun-bond process involves forcing a melt of a biodegradable polymer as disclosed herein through a spinneret. The filaments thus obtained are then rapidly cooled and solidified. This can be achieved using a stream of cool air, such as air having room temperature (25 °C). The solidified fibers are subjected to a gaseous jet stream, wherein the force applied by the jet stream stretches the filaments and is important for polymer orientation and the resultant improved physical properties. The fibers thus obtained are collected to form a web with random arrangement of interlaced fibers, which serves as the foundation for the nonwoven fabric. The next step involves bonding the fibers together to create a nonwoven fabric. This bonding is typically achieved through one of two methods: Mechanical Bonding: The fibers are entangled or mechanically interlocked, often through needle punching or other mechanical means. Thermal Bonding: Heat is applied to the web, causing the fibers to partially melt and bond together.

After bonding, the nonwoven fabric may undergo additional finishing processes to enhance its properties. This could include treatments for water repellency, flame resistance, or other specific functionalities.

According to a preferred embodiment of the present disclosure, the spun-bond process comprises heating the biodegradable polymer to a temperature in the range of from 200 °C to 300 °C °C to provide a molten polymer; and extruding the molten polymer through a spinneret to provide biodegradable fibers. According to another preferred embodiment of the present disclosure, the spun-bond process comprises heating the biodegradable polymer to a temperature in the range of from 220 °C to 270 °C to provide a molten polymer; and extruding the molten polymer through a spinneret to provide biodegradable fibers. According to another preferred embodiment of the present disclosure, the spun-bond process comprises heating the biodegradable polymer to a temperature in the range of from 230 °C to 250 °C to provide a molten polymer; and extruding the molten polymer through a spinneret to provide biodegradable fibers.

Spinning the cooled filaments means subjecting the cooled filaments to a gaseous jet stream/high velocity air thus applying a tension to the filaments to provide fibers.

According to a preferred embodiment of the present disclosure, the biodegradable fibers are led into a tapered conduit by high velocity air, causing acceleration and accompanying attenuation or stretching of the filaments to provide fibers. The spinning leads to a polymer molecular orientation making up the continuous fibers and a modification of fiber diameter. According to a preferred embodiment of the present disclosure, the spinning speed is preferably in the range from 1,000 to 8,000 m/min. According to another preferred embodiment of the present disclosure, the spinning speed is preferably in the range from 4,000 to 5,000 m/min.

*Wet-laid process*

The wet-laid and melt-blown processes are somewhat identical from an equipment and operator's point of view.

As used herein, a wet-laid process comprises the steps of providing a biodegradable polymer as disclosed herein, processing the biodegradable polymer into biodegradable fibers by extrusion, suspending the biodegradable fibers in water to provide a homogenous suspension, draining the water from the homogenous suspension leaving a fibrous membrane, and drying the fibrous membrane to provide a biodegradable fabric.

According to a preferred embodiment of the present disclosure, drying the fibrous membrane to provide a biodegradable fabric is performed at a temperature in the range of from 800 °C to 1200 °C.

Biodegradable fabric prepared by a method according to the present disclosure

In a third aspect, the present disclosure relates to a biodegradable fabric is prepared by a method of manufacturing according to the second aspect of the present disclosure.

Products comprising a biodegradable fabric

In a fourth aspect, the present disclosure relates to a product comprising the biodegradable fabric according to the first aspect of the present disclosure or the biodegradable fabric according to the third aspect of the present disclosure.

It is understood that the products according to the fourth aspect of the present disclosure have the advantage that they are biodegradable, i.e. neither cause waste problems, or problematic waste nor are source of micro plastic and environmental pollution.

According to a preferred embodiment of the present disclosure, the product is a filtration medium. According to a preferred embodiment of the present disclosure, the product is an industrial medium. According to a further preferred embodiment of the present disclosure, the product is a surgical face mask.

According to a preferred embodiment of the present disclosure, the product is a medical fabric. According to a preferred embodiment of the present disclosure, the product is a hospital garment. According to another preferred embodiment of the present disclosure, the product is a drug delivery system. According to another preferred embodiment of the present disclosure, the product is a sanitary product. According to another preferred embodiment of the present disclosure, the product is a biodegradable wipe. According to another preferred embodiment of the present disclosure, the product is an adsorbent. According to another preferred embodiment of the present disclosure, the product is an oil adsorbent or wipe. According to another preferred embodiment of the present disclosure, the product is an apparel. According to another preferred embodiment of the present disclosure, the product is linings. According to another preferred embodiment of the present disclosure, the product is an acoustic product. According to another preferred embodiment of the present disclosure, the product is an isolation material. According to another preferred embodiment of the present disclosure, the product is a car roofing. According to another preferred embodiment of the present disclosure, the product is an agricultural product. According to another preferred embodiment of the present disclosure, the product is a geotextile or textile for agriculture.

Definitions and general embodiments

The term "about" in conjunction with a numerical value refers to normal deviations of said numerical value. It is to be understood that the term "about" can mean a deviation of $\pm$ 10 %, preferably $\pm$ 5 %, more preferably $\pm$ 2.5 % of said numeric value as indicated.

Where the term "comprising" is used in the present disclosure and claims, it does not exclude other elements. For the purposes of the present invention, the term "consisting of" is considered to be a preferred embodiment of the term "comprising". If hereinafter a group is defined to comprise at least a certain number of embodiments, this is also to be understood to disclose a group, which preferably consists only of these embodiments. Furthermore, if a composition is defined using the term "comprising", it may additionally comprise other elements not explicitly listed, but no further amounts of an element listed. If, for example, the blend of a biodegradable polymer and the epoxide compound comprises the biodegradable polymer in an amount of 90 wt.-% based on the total weight of the blend, said blend may comprise components other than the biodegradable polymer, however, not additional amounts of biodegradable polymer, thereby exceeding the amount of 90 wt.-% based on the total weight of the blend.

As used herein, the terms "(*R*)-lactic acid", "D-lactic acid", and "(-)-lactic acid" are used interchangeably. (*R*)-lactic acid has the CAS number 10326-41-7.

As used herein, the term "(*S*)-lactic acid", "L-lactic acid", and "(+)-lactic acid" are used interchangeably. (*S*)-lactic acid has the CAS number 79-33-4.

As used herein, the term "biodegradable polymer" refers to a polymer that is designed to break down naturally in the environment through the action of microorganisms to simple, environmentally benign substances and fulfills the requirements of a biodegradable material according to DIN EN ISO 13432:2000-12. As used herein, DIN EN ISO 13432 refers to the version of the norm as published in December 2012. The norm can be accessed under https://dx.doi.org/10.31030/9010637.

As used herein, the term "biodegradable polyester" refers to a type of biodegradable polymer comprising ester bonds which are designed to be cleaved naturally in the environment through the action of microorganisms to simple, environmentally benign substances. It is understood that a "biodegradable polyester" as used herein is a specific type of a "biodegradable polymer" as defined herein. Non-limiting examples of biodegradable polyesters are polylactic acid homopolymer (PLA), polyhydroxyalkanoate (PHA), polycaprolactone (PCL), polybutylene adipate terephthalate (PBAT), polybutylene succinate (PBS), and polybutylene succinate adipate (PBSA).

As used herein, the term "polylactic acid homopolymer" refers to a polymer consisting of (*R*)-lactic acid monomer units and (*S*)-lactic acid monomer units. In other words, a "polylactic acid homopolymer" as used herein refers to a polymer that is composed of repeating units of the enantiomers of lactic acid which are connected through ester groups. Herein, a "polylactic acid homopolymer" is abbreviated as "PLA".

As used herein, the term "bio-based material" refers to a material that conforms with DIN 16785-1:2016-03.

As used herein, the "mean diameter" of the biodegradable fibers is determined by electron microscopy. According to one embodiment, the diameter of a biodegradable fiber is manually determined by electron microscopy at three randomly selected spots and the mean is calculated. According to another embodiment the diameter of a biodegradable fiber is determined by electron microscopy through software Phenom FiberMetric Software, version of September 2019 (obtained from ThermoFisher Scientific, Netherlands).

As used herein, the amount of (*R*)-lactic acid contained in PLA is determined by NMR-spectroscopy. According to a preferred embodiment, the amount of (*R*)-lactic acid contained in PLA is determined by 2D-$^1$H/$^{13}$C-NMR-spectroscopy. According to a preferred embodiment, the amount of (*R*)-lactic acid contained in PLA is determined by the method disclosed in Suganuma, K.; *et al.* in *Polymer Testing,* Volume 38, September 2014, pages 35-39, which is incorporated herein by reference.

As used herein, the "breaking strength" of the biodegradable fibers and the "elongation at break" of the biodegradable fibers are each determined according to DIN EN ISO 5079:1996-02.

As used herein, the term "$M_n$" refers to the number average molecular weight.

As used herein, the term "$M_w$" refers to the mass average molecular weight.

As used herein, "$M_w$" and "$M_n$" are determined according to method (I) as disclosed herein.

As used herein, the water content of the biodegradable polymeric material is determined by weighing 1 g of the biodegradable polymeric material to provide a sample, storing said sample at 40 °C and 50 mbar until constant weight ($m_{dry}$), and calculating the water content by the formula

$$\text{water content of biodegradable polymeric material} = \frac{1\text{g} - m_{dry}}{1\text{g}} \cdot 100\%$$

As used herein, the water content of the biodegradable polymer is determined by weighing 1 g of the biodegradable polymer to provide a sample, storing said sample at 40 °C and 50 mbar until constant weight ($m_{dry}$), and calculating the water content by the formula

$$\text{water content of biodegradable polymer} = \frac{1\text{g} - m_{dry}}{1\text{g}} \cdot 100\%$$

As used herein, the mean pore size of the biodegradable fabric is determined by an image analysis of a microscopy image with PoreSpy software (latest version available on 8 December 2023). According to a preferred embodiment, the mean pore size of the biodegradable fabric is determined by the method disclosed in Gostick J, Khan ZA, Tranter TG, Kok MDR, Agnaou M, Sadeghi MA, Jervis R. PoreSpy: A Python Toolkit for Quantitative Analysis of Porous Media Images. *Journal of Open Source Software,* 2019. doi:10.21105/joss.01296, which is incorporated herein by reference.

As used herein, the size of the specific weight of the biodegradable fabric is determined by providing a sample of biodegradable fabric, determining the area of said sample of biodegradable fabric with a caliper, weighing said sample of biodegradable fabric, and calculating the ratio between the weight of said sample of the biodegradable fabric and the area of said sample of biodegradable fabric.

*Method (I)*

Size-exclusion chromatography (SEC) analyses were performed with a Jasco (Jasco Europe srl, Cremella, Italy) instrument comprising a PU-2089 Plus quaternary pump and injector with a 20 mL loop, two in-series PLgel MIXED-D columns (Agilent Technologies Italia S.p.A., Cernusco sul Naviglio, Italy; linearity range 200 to 2,000,000 g/mol based on polystyrene equivalent) placed in a Jasco CO-2065 column oven set at 30 °C, a Jasco RI-2031 Plus refractive index detector, and a Jasco UV-2077 Plus multi-channel UV-Vis detector. The samples in the form of films or powders were dissolved in trichloromethane (HPLC grade Sigma-Aldrich, Milan, Italy) with the aid of sonication and filtered through a 0.2 mL pore size PTFE filter to remove the insoluble fraction before injection as 5 mg/mL solutions; elution was performed with trichloromethane at 1 mL/min flow rate. ChromNav Jasco software (Jasco Europe srl, Cremella, Italy) was used for data acquisition and analysis based on a calibration curve obtained by running a set of four monodisperse polystyrene standards (19,000, 50,000, 233,000, and 300,000 g/mol, respectively) and performing a 4th order fit.

**Examples**

Example 1- Preparation of biodegradable polymers

A commercially available PLA resin (obtained from NatureWorks, Ingeo 2003D; herein "neat PLA") was subjected to a thermal, hydrolytical and shear-induced decomposition to yield PLA with lower molecular weight.
The neat PLA was subjected to a high-shear extruder (Berstorff ZE 42 (screw diameter 42, length-to-diameter ratio UD 44, Germany) at the screw rotation speed of 400 min$^{-1}$ and the barrel temperature over 270 °C and a throughput rate of 10 kg/h in the presence of humidity to yield PLA DEG1.
To obtain low molecular mass PLA, the PLA DEG1 was subjected to the above described process again to provide PLA DEG2. The obtained PLA DEG2 was subjected to the above described process again to provide PLA DEG3.
After taking the filaments from each batch, the residual moisture content of the obtained sample was 1.0 % +/- 0.5% and kept at this level until consecutive steps were performed. The changes of the molecular weight characteristics based on dried samples were as follows, table 1.

**Table 1** Molecular weight of neat PLA and different PLA preparations (thermally, hydrolytically and shear-induced decomposition products) as obtained from SEC according to method (I) as disclosed herein.

| Sample | $M_w$ (g/mol) | $M_n$ (g/mol) | D ($M_w/M_n$) |
|---|---|---|---|
| Neat PLA | 201.700 | 116.600 | 1.73 |
| PLA DEG1 | 104.500 | 60.930 | 1.72 |
| PLA DEG2 | 53.096 | 31.449 | 1.69 |
| PLA DEG3 (P1) | 28.571 | 16.632 | 1.72 |

The above disclosed PLA preparations PLA DEG1, PLA DEG2, and PLA DEG3 were used to prepare a biodegradable polymer: For that, PLA DEG3 was reacted with JONCRYL ADR4400 (obtained from BASF) in a compounder to provide a biodegradable polymer. The ratios of JONCRYL ADR4400 and PLA DEG1, PLA DEG2 or PLA DEG3 are given in table 2.
For preparation of the biodegradable polymers, a co-rotation twin-screw extruder was employed consisting of a gravimetrical feeding system for up to 5 components, an underwater granulation system, thermocouples in each barrel / zone. The velocity of screws was set to 120 rpm. The temperature of the barrel / zones of the extruder was set as follows: Feeding zone; 30 °C; barrel 1: 185 °C; barrel 2: 190 °C; barrel 3: 195 °C; barrel 4: 195 °C; barrel 5: 200 °C; barrel 6: 205 °C. Throughput was 30 kg/h.

**Table 2** Sample formulations including relative proportions of components for reactive extrusion and the corresponding weight average molecular weight (Mw), number average molecular weight ($M_n$) and Polydispersity (D).

| Biodegradable polymer | PLA DEG1 | PLA DEG2 | PLA DEG3 | JONCRYL ADR4400 | $M_w$ [kg/mol] | $M_n$ [kg/mol] | D = $M_w/M_n$ |
|---|---|---|---|---|---|---|---|
| 0.9_1 | 99.1% | | | 0.9% | 187.579 | 102.926 | 1.82 |
| 0.9_2 | | 99.1% | | 0.9% | 95.308 | 53.125 | 1.79 |
| 0.9_3 | | | 99.1% | 0.9% | 51.285 | 28.095 | 1.82 |

(continued)

| Biodegradable polymer | PLA DEG1 | PLA DEG2 | PLA DEG3 | JONCRYL ADR4400 | $M_w$ [kg/mol] | $M_n$ [kg/mol] | $D = M_w/M_n$ |
|---|---|---|---|---|---|---|---|
| 0.3_1 | 99.7% | | | 0.3% | 115.406 | 55.751 | 2.07 |
| 0.3_2 | | 99.7% | | 0.3% | 58.961 | 28.902 | 2.04 |
| 0.3_3 | | | 99.7% | 0.3% | 32.489 | 15.620 | 2.08 |

Example 2 - Hydrolytic degradation

Granulate samples of polymers as prepared according to example 1 (the composition of the biodegradable polymer is given in table 3 below) and reference polymer (neat PLA) with a mass of 1 g were dried at 40°C, 50 mbar until constant weight. The samples were placed in a flask and 100 mL of phosphate buffer (pH 7) was added. Samples were thermostated at 65 °C and shaken for 1 h per day. After the hydrolysis process, the samples were filtered, repeatedly washed with water and the remainders dried to constant mass at 40°C, 50 mbar.

The dried remainders were weighed with a precision of 0.0001 g. Loss of sample weight (in percent) was defined based on the difference between the initial sample mass and the sample mass after the hydrolysis. Changes in the mass of the samples were analyzed after 42 days of hydrolysis. Three samples were used for each buffer and each hydrolysis time and the mean weight loss calculated.

**Table 3** Weight loss after hydrolysis treatment in buffer at pH 7

| Biodegradable polymer | weight loss [%] |
|---|---|
| neat PLA | 15 |
| PLA DEG1 | 20 |
| PLA DEG2 | 68 |
| PLA DEG3 (P1) | 100 |
| PLA DEG1 + 0.9 % JONCRYL ADR4400* | 30 |
| PLA DEG2 + 0.9 % JONCRYL ADR4400* | 100 |
| PLA DEG3 + 0.9 % JONCRYL ADR4400* (P2) | 100 |
| * Amount of JONCRYL ADR 4400 is 0.9 wt.-% and amount of PLA DEG1, PLA DEG2, or PLA DEG3, respectively is 99.1 wt.-% based on the total weight of the biodegradable polymer. | |

As can be concluded from the table above, molecules with similar molecular weights behave differently during hydrolysis: Samples that were cross coupled with an epoxide compound showed a higher hydrolytic behavior and thus contribute to fast physical degradation and facilitates faster biodegradation.

Furthermore, it was found that biodegradable polymers having an $M_n$ lower than 40,000 g/mol were hydrolyzed considerably faster.

Moreover, the biodegradation is enhanced by the shorter chain length as opposed to neat PLA and the melt-strength, melt elasticity, was enhanced in comparison to PLA DEG1, PLA DEG2, and PLA DEG3. Melt strength and melt elasticity is crucial for elongational flow dominated processes like melt blown fiber spinning.

Example 3 - Preparation of biodegradable fibers

For further evaluation of the processability in the preparation of fibers, the biodegradable polymers "PLA DEG3" (P1) and "PLA DEG3 + 0.9 % JONCRYL ADR 4400" (P2) according to example 2 were selected. As comparative polymers, commercially available PLA L175 (obtained from Total Corbion, at least 99 wt.-% L-lactic acid) and polypropylene HL708FB (obtained from Borealis) were used.

Fibers were produced with a standard capillary rheometer (Göttfert Rheograph; diameter of the nozzle of 1 mm). Temperature T of the polymer melt was set to 210 °C. The speed of the stamp pushing the polymer melt through down the cylinder of the capillary rheometer was set to 0.3 mm/s. Length of the cylinder was 10 mm. Pressure at the aspirator p was set to 1 bar, 2 bar, 3 bar, or 5 bar, respectively. The diameter of the resulting fibers was determined by electron microscopy as described above.

**Table 4** Mean diameters of fibers obtained from capillary rheometer

| p [bar] | 1 | 2 | 3 | 5 |
|---|---|---|---|---|
| P1 [μm] | 14.6 | 15.1 | 12.4 | 10.4 |
| P2 [μm] | 14.2 | 13.4 | 12.8 | 10.3 |
| L175 [μm] | 29.8 | 23.3 | 19.9 | n.d. |
| HL708FB | n.d. | n.d. | 12.9* | n.d. |
| n.d. = not determined<br>* T was 180 °C | | | | |

It has been found that fibers having a particularly small diameter can be successfully prepared over a wide range of pressures.

Example 4 - Mechanical evaluation of fibers

The fibers prepared according to example 3 were subjected to an evaluation of the mechanical parameters, e.g., according to DIN EN ISO 5079:1996-02. The results are given in tables 5 and 6.

**Table 5** Mean breaking strength of fibers according to example 3

| p [bar] | 1 | 2 | 3 | 5 |
|---|---|---|---|---|
| P1 [MPa] | 525 | 390 | 645 | 990 |
| P2 [MPa] | 900 | 960 | 890 | 940 |
| L175 [MPa] | 460 | 680 | 650 | n.d. |
| HL708FB [MPa] | n.d. | n.d. | 320* | n.d. |
| n.d. = not determined<br>* T was 180 °C | | | | |

Mechanical testing revealed that the fibers have a particularly high strength at breaking. In particular, the fibers having a high breaking strength can be obtained for P2 and the properties are maintained at a wide variety of production parameters. Of note, the biodegradable fibers P1 and P2 had a considerably higher breaking strength than polypropylene fibers at the same fiber diameter.

**Table 6** Elongation at break of fibers according to example 3

| p [bar] | 1 | 2 | 3 | 5 |
|---|---|---|---|---|
| P1 [%] | 305 | 218 | 125 | 125 |
| P2 [%] | 315 | 232 | 162 | 105 |
| L175 [%] | 340 | 190 | 102 | n.d. |
| HL708FB [%] | n.d. | n.d. | 121* | n.d. |
| n.d. = not determined<br>* T was 180 °C | | | | |

Furthermore, mechanical testing revealed that the fibers have a particularly advantageous elongation at breaking.

Example 5 - Preparation of a meltblown fabric

In view of the excellent mechanical properties of the fibers according to the present disclosure, the biodegradable polymers P1 and P2 were further investigated for their use in a melt blowing process. Melt Blowing was performed on a Collin system Extruder E25 P (obtained from Collin). The extruder was used equipped with a melt pump to produce the finest fibers. The molten material (temperature of 190 °C or 210 °C) extruded from the nozzle (10 rpm or 15 rpm) is stretched into very fine filaments by a defined hot high-speed air flow. These fibers are then deposited onto an air-permeable fabric, which is coupled in this case with a suction fan to dissipate the hot air. By depositing a fine fleece can be produced from entangled polymer fibers, which can then be wound up and optionally calendered before winding up if necessary.

The melt blown fabric obtained from the melt blowing process consists of biodegradable fibers having a mean diameter in the range of from 5 μm to 10 μm, irrespective of the process conditions and having excellent mechanical properties as disclosed in example 4.

Example 6 - Preparation of biodegradable fabrics by melt spun technique

The nonwoven fabrics were made by melt spun-bond technique using a laboratory stand constructed with 6 inch die width, 120 holes at 0.245 mm, 0.06 inch air gap, 0.06 inch setback, 30° die angle, 15 L/D extruder. The manufacturing parameters were as follows: Temperature of the melt in the spinning head was 190 °C, air temperature 210 °C. The distance from die to collector was 200-220 mm. Take up speed 2.9-6.8 m/min, extrusion through-put 40 g/min, temperature of the calender 60-105 °C, pressure of air in the feeding chambers 1500-2000 Pa, vacuum in the soaking chamber from 330 - 550 Pa. The spun-bond fabric obtained from the spun-bonding process consists of biodegradable fibers having a mean diameter in the range of from 5 μm to 13 μm and having excellent mechanical properties as disclosed in example 4.

**Claims**

1. A biodegradable fabric comprising a plurality of biodegradable fibers, wherein the biodegradable fibers each comprise a biodegradable polymer obtainable by reacting a blend of

    a) a biodegradable polymeric material in an amount of 97 wt.-% or more based on the total weight of the blend, and
    b) an epoxide compound in an amount of from 0.05 wt.-% to 3 wt.-% based on the total weight of the blend, wherein

    the biodegradable fibers have a mean diameter of 25.0 μm or less.

2. The biodegradable fabric according to claim 1, wherein the biodegradable polymeric material is at least one biodegradable polyester, preferably a biodegradable polyester selected from the group consisting of polylactic acid homopolymer, polyhydroxyalkanoate, polycaprolactone, polybutylene adipate terephthalate, polybutylene succinate, polybutylene succinate adipate, and mixtures thereof.

3. The biodegradable fabric according to any one of claims 1 or 2, wherein the blend comprises the biodegradable polymeric material in an amount of 97.0 wt.-% or more based on the total weight of the blend, preferably in an amount of 98.0 wt.-% or more based on the total weight of the blend, more preferably in an amount of 99.0 wt.-% or more based on the total weight of the blend, most preferably in an amount of 99.5 wt.-% or more based on the total weight of the blend.

4. The biodegradable fabric according to any one of claims 1 to 3, wherein the biodegradable polymeric material is a polylactic acid homopolymer having

    a) a $M_w$ in the range of from 15 kg/mol to 120 kg/mol, preferably in the range of from 20 kg/mol to 105 kg/mol, more preferably of from 20 kg/mol to 80 kg/mol, more preferably of from 20 kg/mol to 55 kg/mol, more preferably of from 23 kg/mol to 40 kg/mol, most preferably of from 25 kg/mol to 30 kg/mol; and/or
    b) a $M_n$ in the range of from 10 kg/mol to 70 kg/mol, preferably in the range of from 10 kg/mol to 50 kg/mol, more preferably of from 10 kg/mol to 35 kg/mol, most preferably of from 12 kg/mol to 20 kg/mol.

5. The biodegradable fabric according to any one of claims 1 to 4, wherein the biodegradable polymeric material is a polylactic acid homopolymer, wherein the polylactic acid homopolymer consists of from 2 wt.-% to 12 wt.-% of (R)-lactic acid monomer units based on the total weight of the polylactic acid homopolymer, preferably of from 2 wt.-% to 8 wt.-%, more preferably of from 2 wt.-% to 6 wt.-%, more preferably of from 3 wt.-% to 5 wt.-%, most preferably about 4 wt.-% of (R)-lactic acid monomer units based on the total weight of the polylactic acid homopolymer.

6. The biodegradable fabric according to any one of claims 1 to 5, wherein the biodegradable polymer has

    a) a $M_w$ in the range of from 20 kg/mol to 190 kg/mol, preferably in the range of from 20 kg/mol to 120 kg/mol, more preferably of from 20 kg/mol to 95 kg/mol, more preferably of from 20 kg/mol to 60 kg/mol, more preferably of from 25 kg/mol to 40 kg/mol, most preferably of from 28 kg/mol to 35 kg/mol; and/or

b) a $M_n$ in the range of from 10 kg/mol to 110 kg/mol, preferably in the range of from 10 kg/mol to 60 kg/mol, more preferably of from 10 kg/mol to 30 kg/mol, most preferably of from 15 kg/mol to 25 kg/mol.

7. .The biodegradable fabric according to any one of claims 1 to 6, wherein the epoxide compound comprises two or more epoxide groups, preferably two or three epoxide groups, more preferably two epoxide groups.

8. The biodegradable fabric according to any one of claims 1 to 7, wherein the biodegradable polymeric material has a water content of 1 wt.-% or less based on the total weight of the biodegradable polymeric material, preferably wherein the biodegradable polymeric material has a water content of 0.1 wt.-% or less based on the total weight of the biodegradable polymeric material, more preferably wherein the biodegradable polymeric material has a water content of 300 ppm or less based on the total weight of the biodegradable polymeric material, most preferably wherein the biodegradable polymeric material has a water content of 150 ppm based on the total weight of the biodegradable polymeric material.

9. The biodegradable fabric according to any one of claims 1 to 8, wherein the biodegradable fibers have a mean diameter in the range of from 1.0 $\mu$m to 25.0 $\mu$m, preferably of from 2.0 $\mu$m to 20.0 $\mu$m, more preferably of from 2.0 $\mu$m to 15.0 $\mu$m, more preferably of from 3.0 $\mu$m to 12.0 $\mu$m, yet more preferably of from 4.0 $\mu$m to 12.0 $\mu$m, most preferably 5.0 $\mu$m to 10.0 $\mu$m.

10. The biodegradable fabric according to any one of claims 1 to 9, wherein the biodegradable fibers each have

a) a breaking strength of at least 100 MPa, preferably of at least 200 MPa, more preferably of at least 300 MPa, more preferably at least 400 MPa; and/or

b) an elongation at break of at least 80 %, preferably at least 100 %, more preferably at least 150 %.

11. Method for manufacturing a biodegradable fabric according to any one of claims 1 to 10, the method comprising the steps of

a) providing a biodegradable polymer obtainable by reacting a biodegradable polymeric material in an amount of 75 wt.-% or more based on the total weight of the blend, and an epoxide compound in an amount of from 0.05 wt.-% to 3 wt.-% based on the total weight of the blend;

b) processing the biodegradable polymer into a plurality of fibers; and

c) bonding the plurality of fibers to provide a biodegradable fabric according to any one of claims 1 to 10.

12. The method according to claim 11, wherein processing the biodegradable polymer into a plurality of fibers and bonding the plurality of fibers is a melt blowing process, preferably wherein the melt blowing process comprises

a) heating the biodegradable polymer to a temperature in the range of from 155 °C to 240 °C to provide a molten polymer; and

b) melt blowing the molten polymer to provide the biodegradable fabric.

13. The method according to any one of claims 11 or 12, wherein melt blowing comprises the step of collecting the fibers on a conveyor belt or on a rotating drum, preferably on a rotating drum.

14. A biodegradable fabric prepared by a method according to any one of claims 11 to 13.

15. A product comprising the biodegradable fabric according to any one of claims 1-10 or 14, preferably wherein the product is a filtration medium (such as a surgical face mask), a medical fabric (such as a hospital garment or a drug delivery system), or a sanitary product (such as a biodegradable wipe), or an adsorbent (such as an oil adsorbent or wipe), or an apparel (such as linings), or an acoustic product (such as an isolation material, e.g. a car roofing), or an agricultural product (such as geotextile or textiles for agriculture).

Europäisches
Patentamt

European
Patent Office

Office européen
des brevets

# EUROPEAN SEARCH REPORT

**Application Number**

EP 23 21 5314

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 103 069 058 A (KIMBERLY CLARK CO) 24 April 2013 (2013-04-24) | 1-4,6-15 | INV. D01F6/92 |
| Y | * paragraphs [0001], [0007], [0008], [0027], [0037], [0047], [0050], [0051], [0052], [0055], [0065], [0087], [0115], [0125]; example 1 * | 5 | D01D5/08 C08L67/04 D04H1/435 |
| Y | JP 4 093595 B2 (CARGILL INC) 4 June 2008 (2008-06-04) | 5 | |
| A | * page 34, paragraphs 6,7; claim 1 * | 1-4,6-15 | |
| A | US 2013/071588 A1 (BASTIOLI CATIA [IT] ET AL) 21 March 2013 (2013-03-21) * paragraphs [0046], [0047], [0107], [0113] * | 1-15 | |

**TECHNICAL FIELDS SEARCHED (IPC)**

D01F
D01D
C08L
D04H

The present search report has been drawn up for all claims

| Place of search | Date of completion of the search | Examiner |
|---|---|---|
| The Hague | 10 June 2024 | Van Beurden-Hopkins |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 567 168 A1

## ANNEX TO THE EUROPEAN SEARCH REPORT
## ON EUROPEAN PATENT APPLICATION NO.

EP 23 21 5314

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2024

| Patent document cited in search report | | | Publication date | Patent family member(s) | | | Publication date |
|---|---|---|---|---|---|---|---|
| CN 103069058 | A | | 24-04-2013 | AU | 2011288212 | A1 | 31-01-2013 |
| | | | | BR | 112013003313 | A2 | 07-11-2017 |
| | | | | CN | 103069058 | A | 24-04-2013 |
| | | | | EP | 2603624 | A2 | 19-06-2013 |
| | | | | KR | 20130097154 | A | 02-09-2013 |
| | | | | MX | 362841 | B | 15-02-2019 |
| | | | | RU | 2013109176 | A | 20-09-2014 |
| | | | | US | 2012040582 | A1 | 16-02-2012 |
| | | | | US | 2015044929 | A1 | 12-02-2015 |
| | | | | WO | 2012020335 | A2 | 16-02-2012 |
| JP 4093595 | B2 | | 04-06-2008 | AT | E277208 | T1 | 15-10-2004 |
| | | | | AU | 742248 | B2 | 20-12-2001 |
| | | | | BR | 9815471 | A | 13-02-2002 |
| | | | | CA | 2287952 | A1 | 12-11-1998 |
| | | | | CN | 1259176 | A | 05-07-2000 |
| | | | | DE | 69826457 | T2 | 13-10-2005 |
| | | | | EP | 0977912 | A1 | 09-02-2000 |
| | | | | ES | 2230689 | T3 | 01-05-2005 |
| | | | | HK | 1025607 | A1 | 17-11-2000 |
| | | | | JP | 4093595 | B2 | 04-06-2008 |
| | | | | JP | 2001522412 | A | 13-11-2001 |
| | | | | KR | 20010012198 | A | 15-02-2001 |
| | | | | NO | 315906 | B1 | 10-11-2003 |
| | | | | NZ | 501274 | A | 29-06-2001 |
| | | | | PT | 977912 | E | 28-02-2005 |
| | | | | US | 6506873 | B1 | 14-01-2003 |
| | | | | WO | 9850611 | A1 | 12-11-1998 |
| US 2013071588 | A1 | | 21-03-2013 | BR | 112012028012 | A2 | 15-05-2018 |
| | | | | CA | 2797945 | A1 | 01-12-2011 |
| | | | | CN | 102933635 | A | 13-02-2013 |
| | | | | EP | 2576653 | A1 | 10-04-2013 |
| | | | | ES | 2574307 | T3 | 16-06-2016 |
| | | | | IT | 1400121 | B1 | 17-05-2013 |
| | | | | KR | 20130118221 | A | 29-10-2013 |
| | | | | KR | 20180063907 | A | 12-06-2018 |
| | | | | PL | 2576653 | T3 | 31-08-2016 |
| | | | | US | 2013071588 | A1 | 21-03-2013 |
| | | | | WO | 2011147806 | A1 | 01-12-2011 |

EPO FORM P0459

For more details about this annex : see Official Journal of the European Patent Office, No. 12/82